# EUROPEAN PATENT SPECIFICATION

(11) **EP 2 985 127 B1**
(45) Date of publication and mention of the grant of the patent: **04.04.2018**
(21) Application number: 15154538.1
(22) Date of filing: 10.02.2015
(51) Int. Cl.: B28D 1/22, B28D 7/04, B23D 59/00, G01B 3/20, G01B 3/56

(54) **Tile cutter equipped with digital display scales**
Fliesenschneider mit digitalen Anzeigeskalen
Appareil de coupe de carreaux équipé d'échelles à affichage numérique

(30) Priority: 11.08.2014 CN 201410392427
(43) Date of publication of application: 17.02.2016
(73) Proprietor: Zhejiang Romway Machinery Manufacturing Co., Ltd., Zhejiang Province 312455 (CN); Shengzhou Romway Trade Co., Ltd., Zhejiang Province 312455 (CN)
(72) Inventor: Xu, Xiaoyu, 312455 SHENGZHOU CITY, ZHEJIANG PROVINCE (CN); Tao, Guofu, 312455 SHENGZHOU CITY, ZHEJIANG PROVINCE (CN); Zhu, Runze, 312455 SHENGZHOU CITY, ZHEJIANG PROVINCE (CN)
(74) Representative: Intès, Didier Gérard André

(56) References cited:
- CN-U- 201 787 914
- DE-U1- 9 218 077
- DE-U1- 29 902 034
- FR-A1- 2 277 322
- FR-A1- 2 935 923
- US-A- 5 205 045
- US-A1- 2003 051 361
- US-B1- 6 223 136

## Description

### BACKGROUND OF THE INVENTION

### 1. Technical Field

The present invention relates to the technical field of tile cutters, in particular, to a tile cutter equipped with a digital scale according to the preamble of claim 1.

### 2. Description of Related Art

Such a tile cutter is known from DE29902034U1. At present, there are a number of varieties of tile cutters on the market, made from plastic, iron or aluminum. However, those materials are directly marked with scales, so the final indication of the scale is unclear in the end and the accuracy is low. During operation, the cutting width cannot be read directly, and the accumulation calculation is required, which brings inconvenience to operation, increases the labor intensity, makes the use inflexible and therefore reduces working efficiency.

### BRIEF SUMMARY OF THE INVENTION

The objective of the present invention is to provide a technical solution of a tile cutter equipped with a digital display scale to overcome the defects in the prior art, realizing accurate measurement of the linear data and angular data of tiles through a linear digital display component and an angular digital display component, bringing convenience to operators for calculation, reducing complexity of manual data measurement and improving the working efficiency. The linear digital display component and angular digital display component can work independently and together, thus making the use more flexible and greatly reducing the labor intensity; meanwhile, the data can be obtained directly and more accurately through the linear data display window and angular data display window, reducing the reject rate and therefore lowering the cost in use of the tiles. The tile cutter is small in size, portable and convenient to use.

To solve the above mentioned technical problem, the present invention adopts the following technical solution:

A tile cutter equipped with a digital display scale having the features of claim 1. Further preferred embodiments of the invention are defined by the features of dependent claims 2-7.

The linear digital display component and angular digital display component respectively can display the linear data and angular data of the tiles, bringing convenience to the operators during calculation, reducing the complexity of manual data measurement and improving the working efficiency. The linear digital display component and the angular digital display component can work independently and together, making the use flexible and greatly reducing the labor intensity. The data are obtained directly and more accurately through the linear data display window and the angular data display window, reducing the reject rate and therefore lowering the cost in use of the tiles. The linear data adjusting knob and the angular data adjusting knob can realize more accurate movement, greatly reducing the error of manual measurement; meanwhile, through the first reset button and second reset button, the tiles can be measured again, and the data accumulated.

Furthermore, the scale body may be provided with a locating block; the locating block may be fixedly connected to the scale body through a second fixing screw; the locating block can effectively prevent failure to read data and deviation of the data read when the linear digital display component moves continuously after passing through the "0" scale of the scale body, thus avoiding affecting the reading accuracy of the linear digital display component.

Furthermore, the scale body may be provided with a locating pin at its end; the locating pin can effectively prevent the linear digital display component from sliding out of the end to cause failure to normally read the data so as to avoid affecting the working efficiency of the digital display scale and affecting the reading accuracy of the linear digital display component.

Furthermore, the scale body may be provided with first scales distributed in a linear way; and the first scales can measure the straight lines of the tiles conveniently.

Furthermore, the rotary locating plate may be provided with second scales distributed in a circular arc way. The second scales can measure the tile angles conveniently and can quickly read the angular data on condition that the linear data are determined, improving the accuracy.

Furthermore, the first housing may be provided with a first fixing screw; when the linear digital display component slides to a certain scale, fastening the first fixing screw can effectively prevent the linear digital display component from sliding so as to avoid affecting the final data measurement, lay a basis for measurement by the angular digital display component and make the use of the angular digital display component more flexible and convenient.

Furthermore, the rotating plate may be provided with a backing; the backing may be made of plastic, aluminum or iron; with the support of the backing, the entire digital display scale can be placed stably, preventing the situation that the final read data of the tile is affected by the uneven surface; and the plastic, aluminum or iron can greatly reduce the cost of using the digital display scale.

The present invention employing the above technical solution has the following beneficial effects:

1. The linear digital display component and angular digital display component respectively can display the linear data and angular data of the tiles, bringing convenience to the operators during calculation, reducing the complexity of manual data measurement and improving the working efficiency. The linear digital display component and the angular digital display component can work independently and together, making the use flexible and greatly reducing the labor intensity. The data are obtained directly and more accurately through the linear data display window and the angular data display window, reducing the reject rate and therefore lowering the cost in use of the tiles.

2. The linear data adjusting knob and the angular data adjusting knob can realize more accurate movement, greatly reducing the error of manual measurement; meanwhile, through the first reset button and the second reset button, the tiles can be measured again, and the data accumulated.

3. The locating block on the scale body can effectively prevent failure to read data and deviation of the data read when the linear digital display component moves continuously after passing through the "0" scale of the scale body, thus avoiding affecting the reading accuracy of the linear digital display component.

4. The locating pin on the scale body can effectively prevent the linear digital display component from sliding out of the end to cause failure to normally read the data so as to avoid affecting the working efficiency of the digital display scale and affecting the reading accuracy of the linear digital display component.

5. The first fixing screw can effectively prevent the linear digital display component from sliding so as to avoid affecting the final data measurement, lay a basis for measurement by the angular digital display component and make the use of the angular digital display component more flexible and convenient.

The tile cutter equipped with a digital display scale has a simple structure and high practicability, enhances the measurement precision of the digital display scale, is convenient and flexible to use, and greatly reduces the labor intensity of operators.

### BRIEF DESCRIPTION OF THE SEVERAL VIEWS OF THE DRAWINGS

The present invention is described in further detail with reference to the attached drawings.
Figure 1 is a structural view of a tile cutter equipped with a digital display scale.
Figure 2 is a structural view in direction A in Figure 1.
Figure 3 is a structural view in direction B in Figure 1.
Figure 4 is a partially enlarged view of position I in Figure 1.

As shown in the figures: 1-scale body; 2-locating block; 3-linear digital display component; 4-rotary locating plate; 5-rotating plate; 6-fixing nut; 7-angular digital display component; 8-backing; 9-locating pin; 10-first fixing screw; 11-second fixing screw; 12-linear digital display window; 13-linear digital adjusting knob; 14-first reset button; 15-first switch button; 16-angular digital display window; 17-angular data adjusting knob; 18-second reset button; 19-second switch button; 20-third fixing screw; 21-first housing; 22-second housing.

### DETAILED DESCRIPTION OF THE INVENTION

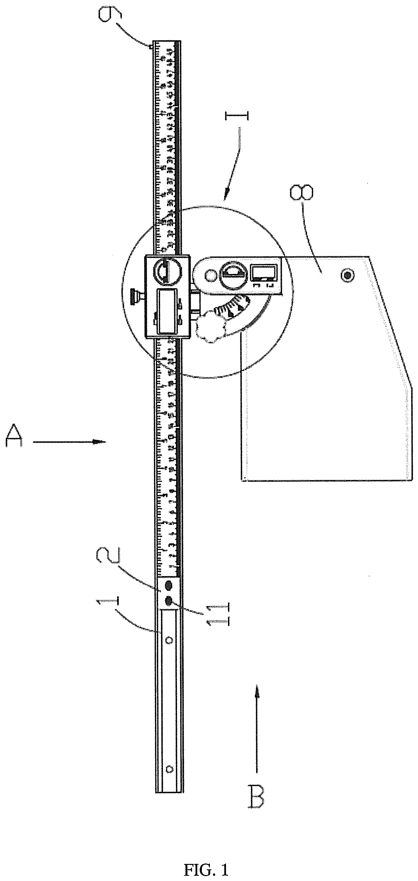

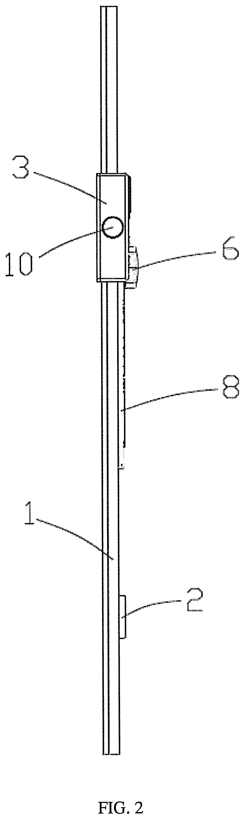

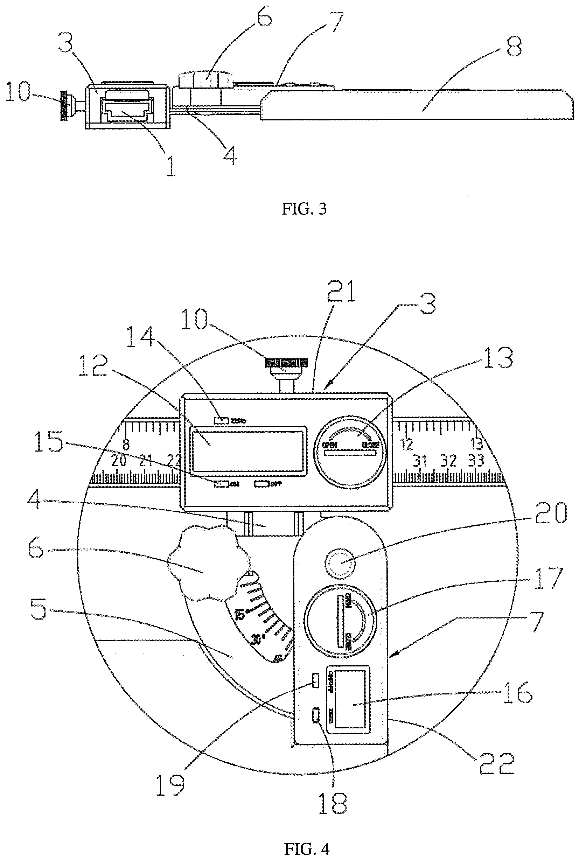

As shown in Figures 1-4, the present invention provides a tile cutter with a digital display scale. The digital display scale comprises a scale body 1 and a display device. The scale body 1 is provided with a locating block 2. The locating block 2 is fixedly connected to the scale body 1 through a second fixing screw 11. The locating block 2 can effectively prevent failure to read data and deviation of the data read when the linear digital display component 3 moves continuously after passing through the scale "0" of the scale body 1, thus avoiding affecting the reading accuracy of the linear digital display component 3. The scale body 1 is provided with a locating pin 9 at its end. The locating pin 9 can effectively prevent the linear digital display component 3 from sliding out of the end to cause failure to normally read the data so as to avoid affecting the working efficiency of the digital display scale and affecting the reading accuracy of the linear digital display component 3. The scale body 1 is provided with first scales that are distributed in a linear way and can conveniently measure the straight sides of tiles. The display device comprises a linear digital display component 3 and an angular digital display component 7. The angular digital display component 7 is directly connected to the linear digital display component 3 through a rotary locating plate 4 and a rotating plate 5; the rotary locating plate 4 is provided with second scales which are distributed in a circular arc way; and the second scales can conveniently measure angles of the ties, and quickly read the angular data on condition that the linear data is determined, thus improving the accuracy. The rotary locating plate 4 is fixedly connected to the linear digital display component 3. The rotating plate 5 is fixedly connected to the rotary locating plate 4 through a fixing nut 6. The angular digital display component 7 is fixedly connected to the rotating plate 5 through a third fixing screw 20. The rotating plate 5 is provided with a backing 8. The backing 8 is made of plastic, aluminum or iron. With the support of the backing 8, the entire digital display scale can be placed stably, preventing the situation that the final read data of the tile is affected by the uneven surface. The plastic, aluminum or iron can greatly reduce the cost of using the digital display scale. The linear digital display component 3 comprises a first housing 21. The first housing 21 is provided with a first fixing screw 10. When the linear digital display component 3 slides to a certain scale fastening the first fixing screw 10 can effectively prevent the linear digital display component 3 from sliding so as to avoid affecting the measurement of the final data, lay a basis for measurement by the angular digital display component 7 and make use of the angular digital display component 7 more flexible and convenient. The first housing 21 is provided with a linear data display window 12 and a linear data adjusting knob 13; the linear data display window 12 is provided with a first reset button 14 and a first switch button 15 respectively on the upper and lower sides; and the first housing 21 is sleeved on the scale body 1. The angular digital display component 7 comprises a second housing 22, and the second housing 22 is provided with an angular data display window 16, an angular data adjusting knob 17, a second reset button 18 and a second switch button 19. The linear digital display component 3 and the angular digital display component 7 can respectively display the linear data and angular data, bringing convenience to operation by the operators, reducing complexity of manual data measurement and improving the working efficiency. The linear digital display component 3 and the angular digital display component 7 can work independently and together, thus making the use more flexible and greatly reducing the labor intensity; at the same time, the data are obtained directly and more accurately through the linear data display window 12 and the angular data display window 16, reducing the reject rate and therefore lowering the cost in use of the tiles. The linear data adjusting knob 13 and the angular data adjusting knob 17 can realize more accurate movement, greatly reducing the error of manual measurement; meanwhile, through the first reset button 14 and the second reset button 18, the tiles can be measured again, and data accumulated.

The specific operation steps of the present invention are as follows: first, place the digital display scale on the measured tile, level the scale body 1 and the tile, move the linear digital display component 3 until reaching the length of the tile to be measured; second, read the data, when the angles of the tile are required to be measured, directly move the angular digital display component 7, and then directly read data from the angular data display window 16. The linear digital display component 3 and the angular digital display component 7 can implement the reset and accumulation operations respectively, which bring convenience to the operators for measurement and calculation.

## Claims

1. A tile cutter equipped with a digital scale, said digital scale comprising a scale body (1) and a display device, wherein said display device comprises a linear digital display (3) component **characterized in that** said display device further comprises an angular digital display component (7) wherein the angular digital display component (7) is connected with said linear digital display component (3) through a rotary locating plate (4) and a rotating plate (5); said rotary locating plate (4) is fixedly connected to the linear digital display component (3); said rotating plate (5) is fixedly connected to the rotary locating plate (4) through a fixing nut (6); said angular digital display component (7) is fixedly connected to the said rotating plate (5) through a third fixing screw (20); said linear digital display component (3) comprises a first housing (21); said first housing (21) is provided with a linear data display window (12) and a linear data adjusting knob(13); said linear data display window (12) is provided with a first reset button (14) and a first switch button (15) respectively on the upper and lower sides; said first housing (21) is sleeved on said scale body (1); said angular digital display component (7) comprises a second housing (22); said second housing (22) is provided with an angular data display window (16), an angular data adjusting knob (17), a second reset button (18) and a second switch button (19).

2. The tile cutter equipped with a digital scale according to Claim 1, **characterized in that**, said scale body (1) is provided with a locating block (2), and said locating block is fixedly connected to said scale body (1) through a second fixing screw (11).

3. The tile cutter equipped with a digital scale according to Claim 1, **characterized in that** said scale body (1) is provided with a locating pin (9) at its end.

4. The tile cutter equipped with a digital scale according to Claim 1, **characterized in that** said scale body (1) is provided with first scales, and said first scales are distributed in a linear way.

5. The tile cutter equipped with a digital scale according to Claim 1, **characterized in that** said rotary locating plate (4) is provided with second scales, and said second scales are distributed in a circular arc way.

6. The tile cutter equipped with a digital scale according to Claim 1, **characterized in that** said first housing (21) is provided with a first fixing screw (10).

7. The tile cutter equipped with a digital scale according to Claim 1, **characterized in that** said rotating plate (5) is provided with a backing (8), and said backing is made of plastic, aluminum or iron.

## Patentansprüche

1. Fliesenschneidgerät, das mit einer digitalen Skala ausgestattet ist, wobei die digitale Skala einen Skalenkörper (1) und ein Anzeigegerät umfasst, wobei
das Anzeigegerät eine lineare digitale Anzeige-(3)-Komponente umfasst,
**dadurch gekennzeichnet, dass** das Anzeigegerät ferner eine digitale Winkelanzeigekomponente umfasst, wobei
die digitale Winkelanzeigekomponente (7) mit der linearen digitalen Anzeigekomponente (3) durch eine rotierende Positionierungsplatte (4) und eine rotierende Platte (5) verbunden ist, die rotierende Positionierungsplatte (4) fest mit der linearen digitalen Anzeigekomponente (3) verbunden ist, die rotierende Platte (5) fest mit der rotierenden Positionierungsplatte (4) durch eine Befestigungsmutter (6) verbunden ist, die digitale Winkelanzeigekomponente (7) fest mit der rotierenden Platte (5) durch eine dritte Befestigungsschraube (20) verbunden ist, die lineare digitale Anzeigekomponente (3) ein erstes Gehäuse (21) umfasst, das erste Gehäuse (21) mit einem linearen Datenanzeigefenster (12) und einem linearen Dateneinstellknopf (13) versehen ist, das lineare Datenanzeigefenster (12) mit einer ersten Reset-Taste (14) und einem ersten Schalterknopf (15) auf der oberen bzw. unteren Seite versehen ist, das erste Gehäuse (21) schlauchartig über den Skalenkörper (1) gezogen ist, die digitale Winkelanzeigekomponente (7) ein zweites Gehäuse (22) umfasst, das zweite Gehäuse (22) mit einem Winkeldatenanzeigefenster (16), einem Winkeldateneinstellknopf (17) einer zweiten Reset-Taste (18) und einem zweiten Schalterknopf (19) versehen ist.

2. Fliesenschneidgerät, das mit einer digitalen Skala nach Anspruch 1 ausgestattet ist, **dadurch gekennzeichnet, dass** der Skalenkörper (1) mit einem Zentrierblock (2) versehen ist, und der Zentrierblock fest mit dem Skalenkörper (1) durch eine zweite Befestigungsschraube (11) verbunden ist.

3. Fliesenschneidgerät, das mit einer digitalen Skala nach Anspruch 1 ausgestattet ist, **dadurch gekennzeichnet, dass** der Skalenkörper (1) mit einem Positionierstift (9) an seinem Ende versehen ist.

4. Fliesenschneidgerät, das mit einer digitalen Skala nach Anspruch 1 ausgestattet ist, **dadurch gekennzeichnet, dass** der Skalenkörper (1) mit ersten Skalen versehen ist, und die ersten Skalen in einer linearen Weise verteilt sind.

5. Fliesenschneidgerät, das mit einer digitalen Skala nach Anspruch 1 ausgestattet ist, **dadurch gekennzeichnet, dass** die rotierende Positionierungsplatte (4) mit zweiten Skalen versehen ist, und die zweiten Skalen in einer Kreisbogenform verteilt sind.

6. Fliesenschneidgerät, das mit einer digitalen Skala nach Anspruch 1 ausgestattet ist, **dadurch gekennzeichnet, dass** das erste Gehäuse (21) mit einer ersten Befestigungsschraube (10) versehen ist.

7. Fliesenschneidgerät, das mit einer digitalen Skala nach Anspruch 1 ausgestattet ist, **dadurch gekennzeichnet, dass** die rotierende Platte (5) mit einem Träger (8) versehen ist, und der Träger aus Kunststoff, Aluminium oder Eisen hergestellt ist.

## Revendications

1. Appareil de coupe de carreaux équipé d'une échelle numérique, ladite échelle numérique comprenant un corps d'échelle (1) et un dispositif d'affichage, dans lequel :
ledit dispositif d'affichage comprend un composant d'affichage numérique linéaire (3), **caractérisé en ce que** ledit dispositif d'affichage comprend en outre un composant d'affichage numérique angulaire (7), dans lequel :
le composant d'affichage numérique angulaire (7) est raccordé audit composant d'affichage numérique linéaire (3) par le biais d'une plaque de positionnement rotative (4) et d'une plaque rotative (5) ; ladite plaque de positionnement rotative (4) est raccordée, de manière fixe, au composant d'affichage numérique linéaire (3) ; ladite plaque rotative (5) est raccordée, de manière fixe, à la plaque de positionnement rotative (4) par le biais d'un écrou de fixation (6) ; ledit composant d'affichage numérique angulaire (7) est raccordé, de manière fixe, à ladite plaque rotative (5) par le biais d'une troisième vis de fixation (20) ; ledit composant d'affichage numérique linéaire (3) comprend un premier boîtier (21) ; ledit premier boîtier (21) est prévu avec une fenêtre d'affichage de données linéaires (12) et un bouton rotatif d'ajustement de données linéaires (13) ; ladite fenêtre d'affichage de données linéaires (12) est prévue avec un premier bouton de réinitialisation (14) et un premier bouton de commutation (15) respectivement sur les côtés supérieur et inférieur ; ledit premier boîtier (21) est emmanché sur ledit corps d'échelle (1) ; ledit composant d'affichage numérique angulaire (7) comprend un second boîtier (22) ; ledit second boîtier (22) est prévu avec une fenêtre d'affichage de données angulaires (16), un bouton rotatif d'ajustement de données angulaires (17), un second bouton de réinitialisation (18) et un second bouton de commutation (19).

2. Appareil de coupe de carreaux équipé d'une échelle numérique selon la revendication 1, **caractérisé en ce que** ledit corps d'échelle (1) est prévu avec un bloc de positionnement (2), et ledit bloc de positionnement est raccordé, de manière fixe, audit corps d'échelle (1), par le biais d'une deuxième vis de fixation (11).

3. Appareil de coupe de carreaux équipé d'une échelle numérique selon la revendication 1, **caractérisé en ce que** ledit corps d'échelle (1) est prévu avec une broche de positionnement (9), au niveau de son extrémité.

4. Appareil de coupe de carreaux équipé d'une échelle numérique selon la revendication 1, **caractérisé en ce que** ledit corps d'échelle (1) est prévu avec des premières échelles, et lesdites premières échelles sont réparties d'une manière linéaire.

5. Appareil de coupe de carreaux équipé d'une échelle numérique selon la revendication 1, **caractérisé en ce que** ladite plaque de positionnement rotative (4) est prévue avec des secondes échelles, et lesdites secondes échelles sont réparties en arc de cercle.

6. Appareil de coupe de carreaux équipé d'une échelle numérique selon la revendication 1, **caractérisé en ce que** ledit premier boîtier (21) est prévu avec une première vis de fixation (10).

7. Appareil de coupe de carreaux équipé d'une échelle numérique selon la revendication 1, **caractérisé en ce que** ladite plaque rotative (5) est prévue avec un renfort (8), et ledit renfort est réalisé à partir de plastique, d'aluminium ou de fer.
